# EUROPÄISCHE PATENTSCHRIFT

(11) **EP 3 817 890 B1**
(45) Veröffentlichungstag und Bekanntmachung des Hinweises auf die Patenterteilung: **28.01.2026**
(21) Anmeldenummer: 19737506.6
(22) Anmeldetag: 04.07.2019
(51) Int. Cl.: B23Q 7/04, B23Q 7/14, B65G 1/04

(54) **PALETTENSYSTEM ZUM SPEICHERN UND TRANSPORTIEREN VON PALETTEN FÜR WERKZEUGMASCHINEN**
PALLET SYSTEM FOR STORING AND TRANSPORTING PALLETS FOR MACHINE TOOLS
SYSTÈME DE PALETTES POUR LE STOCKAGE ET LE TRANSPORT DE PALETTES POUR MACHINES-OUTILS

(30) Priorität: 04.07.2018 DE 102018211023
(43) Veröffentlichungstag der Anmeldung: 12.05.2021
(73) Patentinhaber: DMG MORI Pfronten GmbH, 87459 Pfronten (DE)
(72) Erfinder: RIEDEL, Sebastian, 87637 Eisenberg (DE); TRENKLE, Michael, 87459 Pfronten (DE)
(74) Vertreter: MERH-IP Matias Erny Reichl Hoffmann Patentanwälte PartG mbB
(86) Internationale Anmeldenummer: PCT/EP2019/067972
(87) Internationale Veröffentlichungsnummer: WO 2020/007969

(56) Entgegenhaltungen:
- DE-A1- 102006 024 407
- DE-A1- 3 834 583
- DE-U1- 9 218 147
- JP-A- S 618 264
- JP-A- S57 201 156
- JP-A- S60 161 063
- US-A1- 2006 270 540

## Beschreibung

Die vorliegende Erfindung betrifft ein Palettensystem zum Speichern und Transportieren von Paletten für Werkzeugmaschinen, sowie ein Verfahren zum Betreiben eines Palettensystems.

Um das Bearbeiten einer Vielzahl von Werkstücken durch Werkzeugmaschinen zu automatisieren, werden die Werkstücke üblicherweise auf Paletten angeordnet. Der Vorgang des Anordnens des Werkstücks auf einer Palette wird an einer sogenannten Rüststation durchgeführt. Mittels eines automatisierten Transportsystems kann die Palette für die Bearbeitung zu einer oder mehreren Werkzeugmaschinen transportiert werden. Ein solches Transportsystem weist üblicherweise auch eine Mehrzahl von Speicherpositionen auf, an denen mit einem Werkstück bestückte oder unbestückte Paletten vor, nach oder zwischen Bearbeitungsschritten geparkt werden können.

Bekannt ist beispielsweise ein Rundspeichersystem mit mehreren Speicherpositionen und einer Rüststation. Die Speicherpositionen und die Rüststation sind umfänglich um einen zentralen, drehbareren Palettenwechsler angeordnet, der die Paletten von den Speicherpositionen übernehmen und an eine Werkzeugmaschine übergeben kann. Solche Rundspeichersysteme haben den Nachteil, dass die Anzahl der Speicherpositionen begrenzt ist, und die Paletten in der Regel nur an eine Werkzeugmaschine übergeben werden können.

Für die Bearbeitung von Werkstücken durch mehrere Werkzeugmaschinen werden beispielsweise Linearspeichersysteme verwendet, bei denen der Palettenwechsler auf Schienen verfahrbar angeordnet ist, so dass eine Vielzahl von Werkzeugmaschinen, die entlang der Schienen angeordnet sind, erreicht werden können. Bei der Übergabe einer Palette vom Palettenwechsler an eine Werkzeugmaschine oder an eine Speicherposition ist es bei den bekannten Systemen notwendig, den Abstand zwischen dem Palettenwechsler und der Werkzeugmaschine beziehungsweise Speicherposition, beispielsweise durch Ausfahren von Führungen zu überbrücken. Bei manchen Systemen ist zusätzlich auch eine Hubbewegung notwendig, um einen Höhenunterschied zwischen Palettenwechsler und Werkzeugmaschine beziehungsweise Speicherposition auszugleichen. Insbesondere bei der Bearbeitung von sehr großen und/oder sehr schweren Werkstücken kann dies problematisch werden.

Insbesondere bei Großmaschinen, die zur Bearbeitung großvolumiger und schwerer Werkstücke mit einer Größe im Bereich mehrerer Meter vorgesehen sind, konnte ein automatisiertes Bearbeiten von Werkstücken in einer Fertigungsstraße mit einem Palettentransportier- und speichersystem bislang nur in begrenztem Maße realisiert werden. Zusätzlich sind aufgrund der Größe der Paletten und des Werkstückgewichts komplizierte Verfahrmechanismen zum Transportieren der Palette nur in begrenztem Maße kostengünstig realisierbar.

In der deutschen Offenlegungsschrift DE 27 54 095 A1 werden verschiedene Fertigungsanlagen mit Förderstrecken beschrieben, bei denen die Werkstücke in einer Aufspannzone auf Paletten gespannt und nacheinander auf der Förderstrecke zu einer, einigen oder allen Maschinen transportiert werden. Nachteilig an den dort beschriebenen Förderstrecken ist einerseits, dass eine Vielzahl von Palettenwechslern an Übergabestationen notwendig ist, und dass andererseits ein Regalspeicher verwendet wird, der eine Hubbewegung zum Ablegen der Paletten benötigt.

Die DE 92 18 147 U1 offenbart ein Palettensystem, auf dem der Oberbegriff des Anspruchs 1 basiert.

Aufgabe der vorliegenden Erfindung ist es, ein Palettensystem zum Speichern und Transportieren von Paletten bereitzustellen, das die Probleme der bekannten Palettensysteme löst. Insbesondere soll ein Palettensystem zum Speichern und Transportieren von Paletten bereitgestellt werden, das es ermöglicht, eine Vielzahl großer Paletten für Schwermaschinen raumsparend zu speichern, und in vollautomatisierter Weise einer Vielzahl von Werkzeugmaschinen unter Einhaltung kurzer Zustellzeiten und -wege zuzuführen.

Die Aufgabe wird gelöst durch ein Palettensystem zum Speichern und Transportieren von Paletten gemäß Anspruch 1 und ein Verfahren zum Betreiben eines Palettensystems gemäß Anspruch 14.

Ein erfindungsgemäßes Palettensystem zum Speichern und Transportieren von Paletten für Werkzeugmaschinen umfasst ein lineares Schienensystem zum Tragen und Führen mindestens eines Palettenwechslers in Richtung einer ersten Achse. Diese erste Achse wird im Folgenden auch als X-Achse bezeichnet. Das erfindungsgemäße Palettensystem zum Speichern und Transportieren von Paletten ist insbesondere ein lineares Speichersystem, wobei der Begriff "linear" nicht ausschließt, dass geradlinige Abschnitte des Schienensystems durch kurvenförmige Abschnitte miteinander verbunden sind. Ein lineares Speichersystem mit einem Schienensystem hat den Vorteil, dass es durch Verlängern der Schienen auf einfache Art und Weise erweitert werden kann. Somit kann eine beliebige Anzahl von Speicherpositionen, Rüststationen und/oder Werkzeugmaschinen an den beiden Längsseiten des Schienensystems angeordnet werden. Die Speicherpositionen, Rüststation und Bearbeitungspositionen in den Werkzeugmaschinen werden im Folgenden zusammenfassend als Betriebspositionen der Paletten bezeichnet. Ferner kann auf einem linearen Schienensystem ein sicherer und schneller Transport von Paletten, insbesondere mit besonders schweren und/oder großen Werkstücken erfolgen.

Das Palettensystem zum Speichern und Transportieren von Paletten umfasst mindestens eine Rüststation zum Anordnen eines Werkstücks auf einer Palette und eine Vielzahl von Speicherstationen, die jeweils mindestens eine Palette bevorraten können. Eine Rüststation dient zum hochgenauen Anordnen eines Werkstücks auf einer Palette. Eine Speicherstation dient zum Ablegen einer leeren oder einer mit einem Werkstück bestückten Palette.

Der Palettenwechsler ist mittels eines Antriebs entlang des Schienensystems bewegbar. Der Antrieb kann insbesondere ein elektrischer Motor sein, der mit mindestens einer Schiene des Schienensystems wirkverbunden ist. Der Antrieb kann beispielsweise mit Rädern beziehungsweise Rollen des Palettenwechslers wirkverbunden sein, die auf den Schienen aufliegen und den Palettenwechsler tragen und/oder führen. Mittels eines elektrischen Antriebs kann eine sehr genaue Positionierung des Palettenwechslers auf dem Schienensystem erfolgen.

Der Palettenwechsler ist ausgelegt, eine Palette von einer Betriebsposition zu übernehmen oder an eine Betriebsposition zu übergeben. Der Vorgang des Übernehmens beziehungsweise des Übergebens einer Palette wird im Folgenden auch als Palettenwechsel bezeichnet. Die Betriebspositionen umfassen die mindestens eine Rüststation, die Vielzahl von Speicherstationen und mindestens eine Bearbeitungsposition zum Bearbeiten des auf der Palette angeordneten Werkstücks. Die Bearbeitungsposition befindet sich insbesondere im Arbeitsraum einer Werkzeugmaschine. Mittels des Palettenwechslers kann somit ein Transport einer Palette von einer Betriebsposition zu einer anderen Betriebsposition durchgeführt werden.

Das erfindungsgemäße Palettensystem zum Speichern und Transportieren von Paletten kann insbesondere in einem Fertigungssystem mit Großmaschinen verwendet werden. Großmaschinen sind Werkzeugmaschinen, die besonders große und schwere Werkstücke bearbeiten können. Die Beladung einer Palette kann hierbei mehrere Tonnen (1000 kg) betragen. Beispielsweise sind Großmaschinen bekannt, bei denen die Tischbeladung bis zu ca. 10 oder sogar 20 Tonnen betragen kann. Daher ist es vorteilhaft, wenn das Übernehmen, Transportieren und Übergeben einer Palette, die mit einem Werkstück mit einer Masse von mehreren Tonnen beladen ist, ohne Hubbewegung erfolgen kann. Beim erfindungsgemäßen Palettensystem zum Speichern und Transportieren von Paletten wird die Palette nur horizontal bewegt, so dass auch besonders schwer beladenen Paletten übernommen, transportiert und übergeben werden können.

Vorteilhafte Aus- und Weiterbildungen, welche einzeln oder in Kombination miteinander eingesetzt werden können, sind Gegenstand der abhängigen Ansprüche.

Die mindestens eine Rüststation ist vorzugsweise an einer ersten Längsseite des Schienensystems angeordnet. Die Vielzahl Speicherstationen sind vorzugsweise an einer zweiten Längsseite des Schienensystems angeordnet ist, die der ersten Längsseite gegenüberliegt. Durch das Anordnen der Rüststation und der Speicherpositionen an den Längsseiten kann der verfügbare Platz besonders effizient genutzt werden. Vorzugsweise ist auf der ersten Längsseite eine Vielzahl von Werkzeugmaschinen angeordnet.

Die Rüststationen und/oder Speicherstationen können zusätzlich auch an den Stirnseiten des Schienensystems angeordnet werden. Dies wird insbesondere durch den im Folgenden beschriebenen drehbaren Palettenwechsler ermöglicht. Somit kann die Modularität des Aufbaus des Palettensystems weiter erhöht werden, so dass flexibel auf vorgegebene oder sich ändernde Randbedingungen des Aufstellorts, beispielsweise einer Maschinenhalle, reagiert werden kann. Ferner kann hierdurch der Materialfluss optimier werden. Beispielsweise kann mindestens eine Rüststation an einem Eingang der Maschinenhalle aufgestellt werden, so dass zum Beispiel eine Beladung der Rüststation mit einer Palette oder einer Palette mit einem Werkstück durch einen Gabelstapler ermöglicht wird. Ferner können die Positionen der Rüststationen, Speicherstationen und Werkzeugmaschinen beliebig variiert werden. Es können beispielsweise auch zwischen Werkzeugmaschinen Rüststationen und/oder Speicherstationen angeordnet werden.

Der Palettenwechsler weist mindestens eine Palettenaufnahme auf, die um eine zentrale, senkrechte Achse des Palettenwechslers drehbar ist. Durch Drehen der Palettenaufnahme wird diese so ausgerichtet, dass eine Palette von einer Betriebsposition übernommen beziehungsweise an eine Betriebsposition übergeben werden kann. Das Übernehmen beziehungsweise Übergeben erfolgt vorzugsweise durch eine geradlinige Translationsbewegung der Palette über die Palettenaufnahme entlang einer senkrecht zur Drehachse stehenden Hauptachse der Palettenaufnahme mittels einer Transporteinrichtung, die auf der Palettenaufnahme angeordnet ist.

Dabei ist der Transportmechanismus ausgelegt, eine kraftschlüssige Verbindung zwischen der Stirnseite und/oder Unterseite einer Palette und dem Palettenwechsler zu bewirken, sodass die Palette entlang der Palettenschienen der Palettenaufnahme über einen Antrieb der Transporteinrichtung verfahren werden kann, um die Palette von einer Betriebsposition zu übernehmen und/oder an eine Betriebsposition zu übergeben.

Das erfindungsgemäße Palettensystem kann einen oder auch mehrere Palettenwechsler aufweisen. Bei mehreren Palettenwechslern können diese unabhängig voneinander auf dem Schienensystem verfahren werden. Ferner ist es in bevorzugten Ausführungen möglich, dass ein Palettenwechsler zwei oder mehr drehbare Palettenaufnahmen aufweist, die unabhängig voneinander Paletten übernehmen beziehungsweise übergeben können. Insbesondere können zwei Palettenwechsler eine Palette aneinander übergeben beziehungsweise voneinander übernehmen. Ein solcher Vorgang kann auch bei einem Palettenwechsler mit zwei Palettenaufnahmen möglich sein. Bei einem Palettensystem mit mehreren Palettenwechslern können mehrere Palettenwechsler gleichzeitig durchgeführt werden, so dass die Produktivität einer Fertigungsanlage gesteigert werden kann. Beispielsweise kann eine Werkzeugmaschine durch einen ersten Palettenwechsler mit einer neuen Palette beladen werden, während ein zweiter Palettenwechsler noch dabei ist, eine zuvor aus der Werkzeugmaschine entnommene Palette an eine andere Betriebsposition zu transportieren. Insbesondere werden die mehreren Palettenwechsler daher in einer koordinierten Art und Weise angesteuert, so dass sie ihre Aufgaben möglichst effizient und synergetisch erledigen.

Das erfindungsgemäße Palettensystem ist insbesondere durch die Kombination eines Palettenwechslers mit drehbarer Aufnahme und Transportmechanismus für die Palette auf der Aufnahme und dem linearen Schienensystem besonders platzsparend, was die Aufstellfläche anbetrifft, da die Palette zunächst für längere Verfahrwege entlang des linearen Schienensystems verfahren werden kann, und dann kann der Palettenwechsler ausschließlich durch Drehbewegung direkt an die Werkzeugmaschine, die Rüststation oder die Speicherstation angeschlossen werden, indem die auf der Palettenaufnahme vorgesehenen Schienen mit denen der Rüststation oder Speicherstation ausgerichtet werden und dann die Palette über eine Linearbewegung auf dem Palettenwechsler mittels des auf der Palettenaufnahme vorgesehenen Transportmechanismus verfahren werden kann, um sie in die Rüst-, Speicher- oder Bearbeitungsposition im Arbeitsraum der Werkzeugmaschine zu verbringen. Auf diese Weise ist es möglich, im Stand der Technik übliche zusätzliche lineare Transportsysteme zum Verfahren der gesamten Palettenaufnahme des Wechslers einzusparen, was sich zusätzlich erheblich platzsparend auswirkt. Auf diese Weise kann das lineare Schienensystem sehr nah an den Speicherstationen bzw. der Werkzeugmaschine positioniert werden, da kein Raum für aufwendige und platzeinnehmende zusätzliche Transportsysteme vonnöten sind, die dann die Palette von dem Palettenwechsler in die Werkzeugmaschine oder auf die Speicher- bzw. Rüststation zustellen.

Ein bevorzugter Transportmechanismus weist einen Mitnehmer und einen Kettenantrieb zum Bewegen des Mitnehmers auf. Der Kettenantrieb weist vorzugsweise eine Kette auf, die über mindestens zwei Umlenkrollen geführt wird. Mittels des Kettenantriebs kann eine Drehbewegung der Umlenkrollen in eine Translationsbewegung der Kette übertragen werden. Der Mitnehmer, der an der Kette angeordnet ist, überträgt die Translationsbewegung auf die Palette.

Beim Betrieb des Palettenwechslers wird die Palettenaufnahme durch eine Drehung um die Drehachse in eine von vier bevorzugten Winkelstellungen ausgerichtet. Die Winkelstellungen geben jeweils den Winkel zwischen der Hauptachse der Palettenaufnahme relativ zur X-Achse an. Beim Bewegen des Palettenwechslers entlang des Schienensystems wird die Palettenaufnahme vorzugsweise entlang der X-Achse ausgerichtet. Diese Stellung entspricht einem Winkel von 0 Grad beziehungsweise 180 Grad. Beim Übergeben beziehungsweise Übernehmen einer Palette wird die Palettenaufnahme in der Regel senkrecht zur X-Achse ausgerichtet. Die Achse senkrecht zur X-Achse wird im Folgenden auch als Y-Achse bezeichnet. Diese Stellung der Palettenaufnahme entspricht somit einem Winkel von 90 Grad beziehungsweise 270 Grad. Durch die drehbare Palettenaufnahme sind auch Betriebspositionen erreichbar, die nicht an einer Längsseite sondern an einer Stirnseite des Schienensystems angeordnet sind. Beim Übergeben beziehungsweise Übernehmen einer Palette ist die Palettenaufnahme dann entsprechend entlang der X-Achse ausgerichtet.

Auf der Palettenaufnahme sind vorzugsweise zwei Schienen zum Tragen und Führen einer Palette angeordnet. Diese Schienen werden im Folgenden auch als Palettenschienen bezeichnet. Die Palettenschienen verlaufen parallel zur Hauptachse der Palettenaufnahme. Die Paletten weisen entsprechende Elemente auf, die mit den Palettenschienen in Wirkverbindung treten. Beispielsweise kann die Palette Führungsrollen aufweisen, welche die Palette entlang der Palettenschienen führen. Ferner kann die Palette Räder oder Rollen zum Tragen der Palette auf den Palettenschienen aufweisen. Die Speicherstationen, die mindestens eine Rüststation und die Bearbeitungspositionen der Werkzeugmaschinen weisen entsprechende Palettenschienen auf. Beim Übergeben beziehungsweise Übernehmen der Palette werden die Palettenschienen des Palettenwechslers entlang der Palettenschienen der jeweiligen Betriebsposition ausgerichtet, so dass die Palette durch eine einfache Translationsbewegung vom Palettenwechsler auf die Betriebsposition übergeben beziehungsweise von der Betriebsposition auf den Palettenwechsler übernommen werden kann. Das Ausrichten der Palettenschienen erfolgt vorzugsweise nur durch eine Translationsbewegung des Palettenwechslers auf dem Schienensystem und eine Drehbewegung der Palettenaufnahme.

Vorzugsweise sind die Palettenschienen der Rüststation auf einem um 360 Grad drehbaren Drehtisch angeordnet. Durch Drehen des Drehtisches kann ein Werkstück auf der Palette ausgewuchtet werden, um es für eine Bearbeitung in einer Werkzeugmaschine auszurichten.

In einer bevorzugten Ausführung der Erfindung ist die Palettenaufnahme asymmetrisch, so dass ein erstes Ende der Palettenaufnahme einen größeren entlang der Schienen gemessenen Abstand zur Drehachse aufweist, als ein zweites Ende der Palettenaufnahme, das dem ersten Ende gegenüberliegt. Durch die asymmetrische Ausführung der Palettenaufnahme sind insbesondere die Winkelstellungen 0 Grad und 180 Grad sowie die Winkelstellungen 90 Grad und 270 Grad jeweils voneinander unterscheidbar. Vorzugsweise findet die Translationsbewegung der Palette beim Übergeben beziehungsweise Übernehmen stets über das erste Ende statt. Eine Bewegung der Palette über das zweite Ende findet vorzugsweise nicht statt.

Das lineare Schienensystem weist vorzugsweise mindestens eine Trageschiene zum Tragen des Palettenwechslers und/oder mindestens eine Antriebsschiene, auf die der Antrieb des Palettenwechslers einwirkt, und/oder mindestens eine Stromschiene zum Versorgen des Antriebs des Palettenwechslers mit elektrischer Energie auf. Das Schienensystem umfasst mindestens zwei Trageschienen, wobei mindestens eine der Trageschienen gleichzeitig als Antriebsschiene und/oder Führungsschiene verwendet werden kann. Bei einer bevorzugten Ausgestaltung kann die Antriebsschiene eine Zahnstange aufweisen, mit der ein Zahnrad des Antriebs des Palettenwechslers wirkverbunden ist. Die Trageschienen können beispielsweise die Form von Kranschienen, Vignolschienen oder Rillenschienen haben. Die Schienen des Schienensystems können beispielsweise auf Verankerungen im Boden beziehungsweise im Fundament einer Maschinenhalle verlegt werden. Alternativ zu einer Stromschiene kann auch eine Energiekette zum Versorgen des Palettenwechslers mit elektrischer Energie verwendet werden. In bevorzugten Ausführungen kann das Schienensystem statt Tragschienen auch klassische Linearführungen aufweisen. Die Schienen oder Linearführungen können beispielsweise auf einem Schweißgestell montiert sein.

Gemäß einem weiteren Aspekt der Erfindung können die Speicherstationen jeweils mindestens zwei senkrecht übereinander angeordnete Ebenen mit jeweils mindestens zwei Ablagepositionen für Paletten aufweisen. Auf diese Weise kann ein Regalspeichersystem für Paletten realisiert werden, so dass auf einer verfügbaren Fläche eine höhere Anzahl an Speicherplätzen bereitgestellt werden kann.

Um Paletten an Ablagepositionen in einem Regalspeichersystem mit mehreren Ebenen abzulegen beziehungsweise von Ablagepositionen in mehreren Ebenen aufzunehmen weist ein bevorzugter Palettenwechsler einen Vertikalantrieb zum Anheben von Paletten auf. Mittels des Vertikalantriebs kann insbesondere ein Palettenheber nach oben und nach untern verfahren werden. Hierzu kann der Palettenwechsler eine vertikal angeordnete Führungsschiene aufweisen. Die mit dem Vertikalantrieb durchgeführte Hubbewegung erfolgt vorzugsweise parallel zur Z-Achse.

In einer bevorzugten Ausführung umfasst der Palettenwechsler einen Palettenheber mit einer teleskopisch ausfahrbaren Palettengabel zum Aufnehmen von Paletten. Die Palettengabel ist insbesondere in Richtung der Y-Achse ausfahrbar, um einen Abstand zwischen Palettenwechsler und Betriebsposition einer Palette zu überbrücken.

Die erfindungsgemäße Aufgabe wird ferner gelöst durch ein Verfahren zum Betreiben eines Palettensystems. Gemäß dem Verfahren werden die Paletten ausschließlich mittels einer Kombination der folgenden Verfahrensschritte bewegt: Verschieben des Palettenwechslers entlang der ersten Achse auf dem Schienensystem, Verschieben der Palette entlang der zweiten Achse und Drehen der Palettenaufnahme um die senkrechte Achse, wobei die einzelnen Verfahrensschritte mehrmals ausgeführt werden können.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

Es zeigen schematisch:
- **Figur 1:**: eine perspektivische Ansicht eines Palettensystems gemäß einem ersten Ausführungsbeispiel.
- **Figur 2:**: eine Grundrissdarstellung eines Palettensystems gemäß dem ersten Ausführungsbeispiel mit einer veränderten Konfiguration.
- **Figur 3:**: (a) eine Draufsicht von unten einer Palette und (b) eine Schnittansicht der Palette.
- **Figur 4:**: (a) eine perspektivische Ansicht eines Palettenwechslers und (b) eine Frontalansicht des Palettenwechslers.
- **Figur 5:**: (a) eine perspektivische Ansicht einer Rüststation und (b) eine Schnittansicht der Rüststation.
- **Figur 6:**: (a) eine perspektivische Ansicht einer Speicherstation und (b) eine Schnittansicht der Speicherstation.
- **Figur 7:**: (a) bis (h) einen Vorgang des Übernehmens einer Palette von einer Betriebsposition in einer Werkzeugmaschine und des Übergebens der Palette an einer Betriebsposition in einer Speicherstation.
- **Figur 8:**: eine perspektivische Ansicht eines Palettensystems gemäß einem zweiten Ausführungsbeispiel.
- **Figur 9:**: eine perspektivische Ansicht einer Speicherstation des zweiten Ausführungsbeispiels.
- **Figur 10:**: (a) eine perspektivische Ansicht eines Palettenwechslers des zweiten Ausführungsbeispiels und (b) eine Frontalansicht des Palettenwechslers.
- **Figur 11:**: eine Grundrissdarstellung eines erfindungsgemäßen Palettensystems mit einer weiteren veränderten Konfiguration.

### Ausführliche Beschreibung der Erfindung anhand eines Ausführungsbeispiels

Bei der nachfolgenden Beschreibung einer bevorzugten Ausführungsform der vorliegenden Erfindung bezeichnen gleiche Bezugszeichen gleiche oder vergleichbare Komponenten.

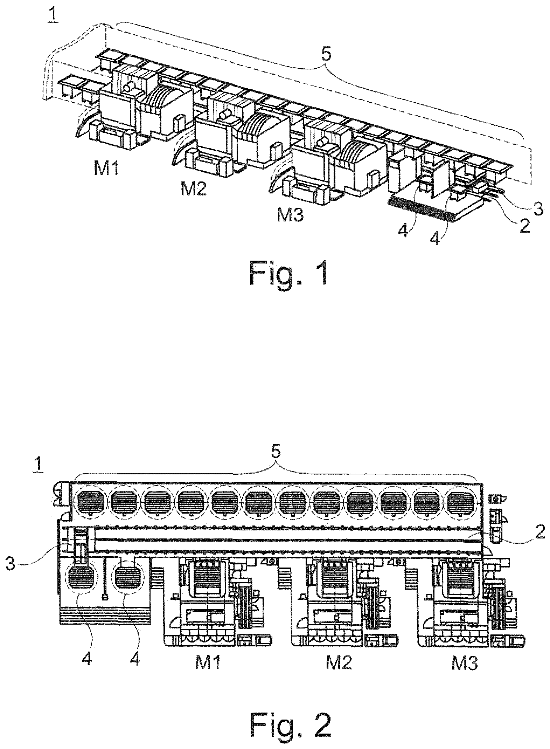

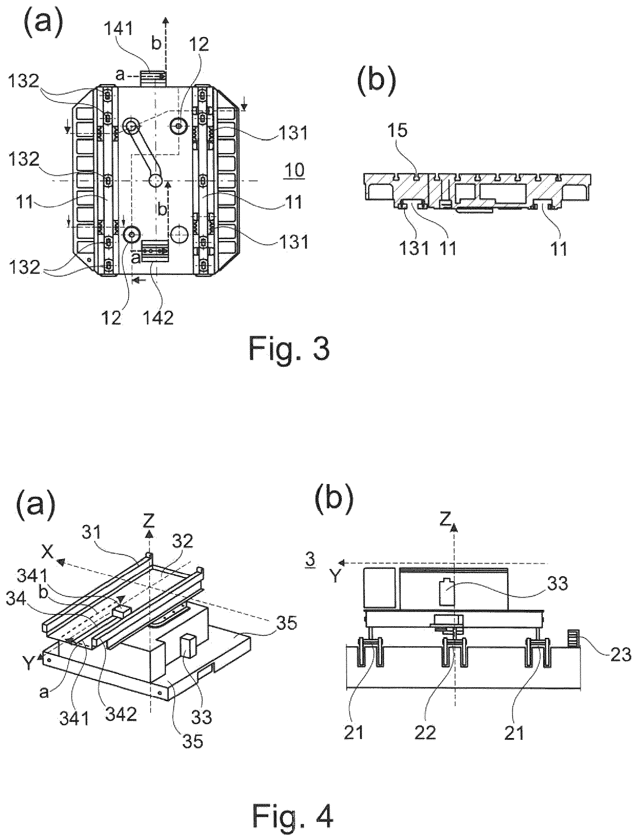

Fig. 1 zeigt eine perspektivische Ansicht eines Palettensystems 1 zum Speichern und Transportieren von Paletten gemäß einem ersten Ausführungsbeispiel mit zwanzig Speicherstationen 5, die entlang einer Längsseite einer Schienensystems 2 angeordnet sind. Auf der gegenüberliegenden Längsseite des Schienensystems 2 sind drei Werkzeugmaschinen M1, M2, M3, zwei Rüststationen 4 und zwei weitere Speicherstationen 5 angeordnet. In der Darstellung der Fig. 1 sind die Speicherstationen 5 und die Rüststationen 4 jeweils mit einer unbestückten Palette 10 belegt. Das Schienensystem 2 weist drei parallele, geradlinige Schienen auf, von denen die beiden äußeren als Trageschienen für einen Palettenwechsler 3 dienen. Die mittlere Schiene des Schienensystems 2 dient als Führungs- und Antriebsschiene. Eine genauere Beschreibung der Schienen des Schienensystems 2 erfolgt weiter unten unter Bezugnahme auf Fig. 4(b).

Der Palettenwechsler 3 kann mittels eines Antriebs entlang der Schienen des Schienensystems 2 verfahren werden und Paletten von den Rüststationen 4, den Speicherstationen 5 oder den Werkzeugmaschinen M1, M2, M3 übernehmen beziehungsweise an diese übergeben. In der Darstellung von Fig. 1 ist der Palettenwechsler 3 an der ersten Rüststation 4 ganz rechts im System 1 positioniert. Aus dieser Position heraus kann der Palettenwechsler 3 die Palette durch ein Verschieben der Palette von der ersten Rüststation 4 übernehmen. Auf den Paletten kann jeweils ein Werkstück zum Bearbeiten angeordnet werden. In den Figuren sind jedoch keine Werkstücke dargestellt.

Eine veränderte Konfiguration eines erfindungsgemäßen Palettensystems 1 gemäß dems ersten Ausführungsbeispiels ist in der Grundrissdarstellung der Fig. 2 gezeigt. Das Palettensystem 1 zum Speichern und Transportieren von Paletten der Fig. 2 unterscheidet sich von dem in Fig. 1 gezeigten Palettensystem zum Speichern und Transportieren von Paletten 1 lediglich in der Anzahl und Anordnung (Position) der Speicherstationen 5 und Rüststationen 4. In der Konfiguration der Fig. 2 sind zwölf Speicherstationen 5 auf einer ersten Längsseite des Schienensystems 2 angeordnet. Zwei Rüststationen 4 und drei Werkzeugmaschinen M1, M2, M3 sind auf der gegenüberliegenden Längsseite des Schienensystems 2 angeordnet. Das Schienensystem 2 entspricht im Wesentlich dem Schienensystem 2 der Fig. 1. Es weist drei parallele, geradlinige Schienen auf, wobei die beiden äußeren Schienen als Trageschienen für den Palettenwechsler 3 dienen. Die mittlere Schiene dient als Antriebsschiene. Die drei Schienen des Schienensystems 2 sind parallel zu einer ersten Achse verlegt, die im Folgenden als X-Achse bezeichnet wird. Der Palettenwechsler kann somit in Richtung der X-Achse auf dem Schienensystem 2 verfahren werden.

In der Darstellung von Fig. 2 ist der Palettenwechsler 3 an der ersten Rüststation 4 ganz links im System 1 positioniert. Durch ein Verschieben der Palette kann der Palettenwechsler 3 die Palette von der ersten Rüststation 4 übernehmen. In Fig. 2 sind auch die Betriebspositionen der Paletten innerhalb der Werkzeugmaschinen M1, M2, M3 dargestellt. Wie man in der Darstellung der Fig. 2 erkennen kann, sind die Betriebspositionen der Palette auf den Speicherstationen 5, den Rüststationen 4 und in den Werkzeugmaschinen M1, M2, M3 jeweils mit dem gleichen Abstand zur mittleren Schiene des Schienensystem 2 angeordnet, so dass der Vorgang des Übernehmens beziehungsweise Übergebens einer Palette durch den Palettenwechsler 3 jeweils in gleicher Weise durchgeführt werden kann, ohne dass eine Linearbewegung des Palettenwechslers 3 senkrecht zur X-Achse notwendig ist.

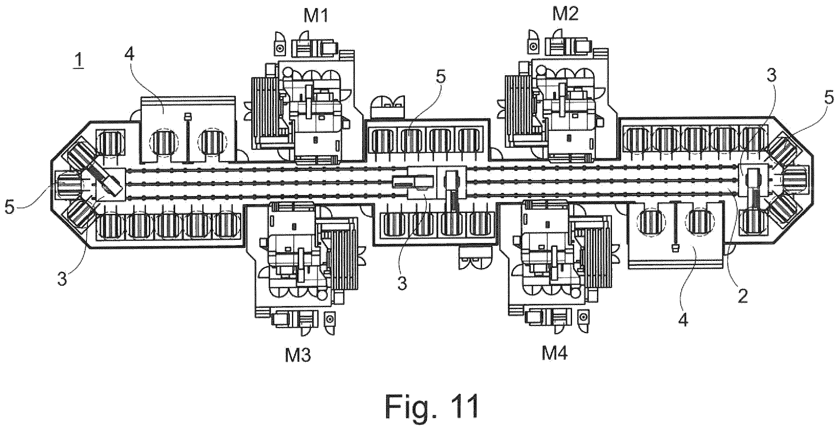

Abweichend von den in Fig. 1 und 2 dargestellten Konfigurationen kann das Palettensystem 1 auch Rüststationen 4 oder Speicherstationen 5 aufweisen, die nicht an den Längsseiten, sondern an den Stirnseiten des Schienensystems 2 angeordnet sind. Eine solche Konfiguration wird weiter unten anhand von Fig. 11 beschrieben. Die stirnseitige Anordnung wird insbesondere durch den im Folgenden beschriebenen drehbaren Palettenwechsler 3 ermöglicht. Somit kann die Modularität des Aufbaus des Palettensystems 1 weiter erhöht werden, so dass flexibel auf vorgegebene oder sich ändernde Randbedingungen des Aufstellorts, beispielsweise einer Maschinenhalle, reagiert werden kann. Ferner kann hierdurch der Materialfluss optimier werden. Beispielsweise kann mindestens eine Rüststation 4 an einem Eingang der Maschinenhalle aufgestellt werden, so dass zum Beispiel eine Beladung der Rüststation 4 mit einer Palette oder einer Palette mit einem Werkstück durch einen Gabelstapler ermöglicht wird. Ferner können die Positionen der Rüststationen 4, Speicherstationen 5 und Werkzeugmaschinen beliebig variiert werden. Es können beispielsweise auch zwischen Werkzeugmaschinen M1, M2, M3 Rüststationen 4 und/oder Speicherstationen 5 angeordnet werden.

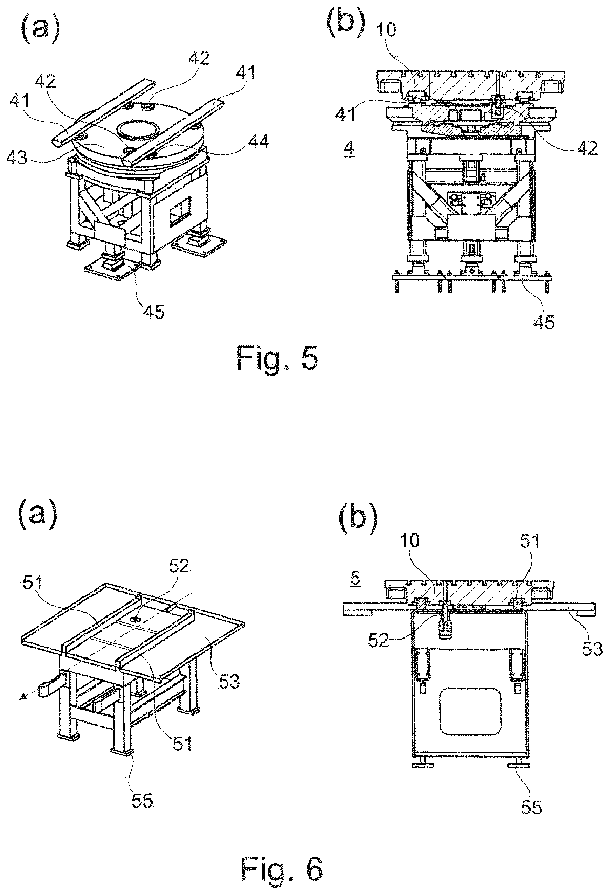

Ein Ausführungsbeispiel einer Palette 10 ist in Fig. 3 dargestellt. Die Palette der Fig. 3 entspricht den in Fig. 1, 2, 5 und 6 dargestellten Paletten. Fig. 3(a) zeigt eine Draufsicht auf die Unterseite der Palette 10 und Fig. 3(b) zeigt eine Schnittansicht der Palette 10. Die Palette 10 weist auf ihrer Unterseite zwei Nuten 11 mit einem T-förmigen Querschnittsprofil auf, die jeweils zum Aufnehmen einer Schiene dienen. In den Nuten 11 sind jeweils eine Vielzahl von Tragerollen 132 und eine Vielzahl von Führungsrollen 131 angeordnet. Die Tragerollen 132 tragen das Gewicht der Palette 10 und des darauf angeordneten Werkstücks und ermöglichen ein reibungsarmes Gleiten der Palette 10 auf den Schienen. Die Führungsrollen 131 sind so angeordnet, dass sie von beiden Seiten seitlich an den Schienen anliegen und die Bewegung der Palette 10 auf den Schienen führen. In der Schnittansicht der Fig. 3(b) ist das T-förmige Profil der Nuten 11 erkennbar. In Fig. 5(b) ist dargestellt, wie Schienen 41 mit T-förmigen Profil passgenau zum hochgenauen Führen in den Nuten 11 liegen. In Fig. 6(b) ist dargestellt, wie Schienen 51 mit rechteckigem Profil in den Nuten 11 liegen.

Ferner ist in der Schnittansicht der Fig. 3(b) eine Vielzahl von Befestigungsnuten 15 an der Oberseite der Palette 10 dargestellt. Die Befestigungsnuten 15 dienen zum Befestigen eines Werkstücks auf der Palette 10. Anstelle der Nuten 15 oder zusätzlich zu den Nuten 15 kann die Palette 10 an ihrer Oberseite auch eine Vielzahl von Gewindelöchern zum Befestigen von Werkstücken aufweisen.

Ferner sind zwei Indexaufnahmen 12 an der Unterseite der Palette 10 angeordnet. In die Indexaufnahmen 12 kann jeweils ein Indexzylinder zum Justieren und Positionieren der Palette 10 eingefahren werden. Diese Funktion wird im Folgenden unter Bezugnahme auf Fig. 5(b) und 6(b) näher beschrieben.

Außerdem sind zwei Mitnehmerführungen 141, 142 an der Palette 10 angeordnet. Eine erste Mitnehmerführung 141 ist an einer Stirnseite der Palette 10 angeordnet und eine zweite Mitnehmerführung 142 ist an der Unterseite der Palette 10 angeordnet. Die Mitnehmerführungen 141, 142 sind im dargestellten Ausführungsbeispiel jeweils als seitlich geöffnete, vorzugsweise hinterschnittene Nut ausgeführt, in die ein Mitnehmer, der vorzugsweise eine Auskragung aufweist, von der geöffneten Seite her eingreifen kann, so dass er eine lösbare, formschlüssige Verbindung mit der Mitnehmerführung 141, 142 eingehen kann, um eine Translationsbewegung der Palette 10 zu bewirken. Diese Funktion wird im Folgenden unter Bezugnahme auf Fig. 4 näher beschrieben.

Fig. 4(a) zeigt eine perspektivische Ansicht des Palettenwechslers 3 und Fig. 4(b) zeigt eine Schnittansicht des Palettenwechslers 3. In Fig. 4 sind die Richtungen der X-Achse sowie der dazu senkrecht stehenden Y-Achse und Z-Achse dargestellt. Die Z-Achse in Fig. 4(a) verläuft parallel zu einer Drehachse des Palettenwechslers 3.

Der Palettenwechsler 3 weist eine drehbar gelagerte Palettenaufnahme 32 mit zwei darauf angeordneten Schienen 31 zum Aufnehmen einer Palette 10 auf. Die Schienen 31 haben ein rechteckiges Profil und passen ähnlich wie die Schienen 51 der Speicherstation 5 in die Schienennuten 11 der Palette, wie in der Schnittansicht der Fig. 6(b) dargestellt ist.

Auf der Palettenaufnahme 32 ist ferner ein Verschiebemechanismus 34 mit vier Umlenkrollen 341 und einer um die Umlenkrollen 341 laufenden Kette angeordnet. Mittels der vier Umlenkrollen 341 kann die Kette einem im Wesentlichen rechteckigen Umlaufweg folgen, wobei jeweils eine Umlenkrolle 341 an einer Ecke des im Wesentlich rechteckigen Weges angeordnet ist. Statt einer Kette kann auch ein Band oder ein Riemen verwendet werden. Eine der mindestens zwei Umlenkrollen 341 kann über einen Motor angetrieben werden.

Auf der Kette des Verschiebemechanismus 34 ist ferner mindestens ein Mitnehmer 342 angeordnet, der in die Mitnehmerführungen 141, 142 der Palette 10 eingreifen kann, um eine Translationsbewegung von der Kette auf die Palette 10 zu übertragen. Wie in Fig. 3(a) dargestellt weisen die Mitnehmerführungen 141, 142 jeweils eine seitlich geöffnete, vorzugsweise hinterschnittene Nut auf, so dass bei einer umlaufenden Bewegung der Kette um die Umlenkrollen 341 ein Mitnehmer 342 in die Mitnehmerführung 141, 142 eingreift, und nach Erreichen einer festgelegten Position wieder aus der Mitnehmerführung 141, 142 austritt, so dass ein Vorgang des Verschiebens der Palette 10 um eine festgelegte Distanz zwischen einer Betriebsposition und einer Position auf dem Palettenwechsler 3 durchgeführt wird. Folgt man der Bewegung des Mitnehmers 342, so führt dieser bei einem Umlauf um die Umlenkrollen 341 im Wesentlichen zwei Translationsbewegungen parallel zur X-Achse und zwei Translationsbewegungen parallel zur Y-Achse aus.

Der Richtungen im Bewegungsablauf des Mitnehmers 342 werden in Fig. 3(a) und entsprechend in Fig. 4(a) durch die dicken gepunkteten Pfeile a und b dargestellt. Zum Greifen einer Palette 10 von einer Betriebsposition in einer Speicherstation 5, einer Rüststation 4 oder einer Werkzeugmaschine M1, M2, M3 wird der Mitnehmer 342 durch Antreiben einer der Umlenkrollen 341 über die Kette bewegt. Der Vorgang des Übernehmens beziehungsweise Übergebens der Palette 10 durch den Palettenwechsler 3 erfolgt in zwei Stufen. In der ersten Stufe wird die Palette 10 mittels der ersten Mitnehmerführung 141 an der Stirnseite der Palette 10 um die halbe Distanz auf den Palettenwechsler 3 gezogen. In der zweiten Stufe wird die Palette 10 mittels der zweiten Mitnehmerführung 142 an der Unterseite der Palette 10 um die verbleibende Wegstrecke auf den Palettenwechsler 3 gezogen.

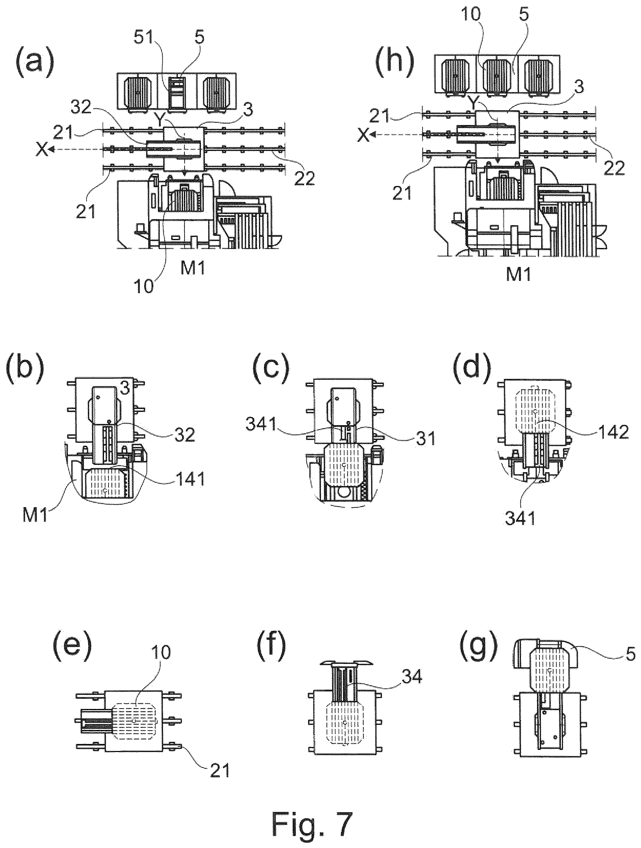

Eine detaillierte Illustration des Bewegungsablaufs beim Übernehmen und Übergeben einer Palette 10 zwischen zwei Betriebspositionen ist in Fig. 7(a) bis 7(h) schrittweise dargestellt. Fig. 7(a) zeigt die Ausgangssituation, in der eine Palette 10 in einer Betriebsposition in der Werkzeugmaschine M1 positioniert ist. Das Ziel ist es, die Palette 10 an den freien Platz in der Speicherstation 5 zu transportieren. Die Endsituation mit der Palette 10 in der gewünschten Speicherstation 5 ist in Fig. 7(h) dargestellt. Fig. 7(a) und 7(h) mit der Ausgangssituation und der Endsituation sind jeweils als Übersicht mit Speicherstation 5 und Maschine M1 dargestellt. Die Zwischenschritte in Fig. 7(b) bis 7(g) sind als Ausschnittszeichnungen dargestellt. Um eine unübersichtliche Darstellung zu vermeiden, wird darauf verzichtet, alle Bezugszeichen in allen Zeichnungen wiederzugeben. Die Stellung der Palettenaufnahme 32 des Palettenwechslers wird in der folgenden Beschreibung in Analogie zu einem Stundenzeiger einer Uhr mit den entsprechenden Uhrzeiten benannt. In Fig. 7(a) und 7(h) ist die Palettenaufnahme 32 also in der 9-Uhr-Position.

In Fig. 7(b) wird zunächst die Palettenaufnahme 32 in die 6-Uhr-Position geschwenkt, so dass das ausladende Ende der asymmetrischen Palettenaufnahme 32 an der Stirnseite der Palette 10 ausgerichtet und angeschlossen wird. In dieser Stellung kann der Mitnehmer 342 in die erste Mitnehmerführung 141 an der Stirnseite der Palette 10 eingreifen. Hierzu führt der Mitnehmer 342 zunächst eine Bewegung parallel zur X-Achse aus, die in Fig.3(a) und 4(a) durch den Pfeil a angedeutet wird. Hierbei greift der Mitnehmer 342 seitlich in die erste Mitnehmerführung 141 der Palette 10 ein und geht eine lösbare, formschlüssige Verbindung mit der Mitnehmerführung 141 ein. An der nächsten Umlenkrolle 341 des Verschiebemechanismus 34 wird die Bewegungsrichtung des Mitnehmers 342 geändert, so dass er sich parallel zur Y-Achse entlang des Pfeils b bewegt und ein Verschieben der Palette 10 entlang der Y-Achse auf den Palettenwechsler 3 bewirkt. In Fig. 7(c) befindet sich die Palette 10 gerade in der ersten Stufe der Bewegung auf den Palettenwechsler 3, wobei die Palette schon durch die Schienen 31 der Palettenaufnahme 32 geführt wird.

Beim Erreichen der nächsten Umlenkrolle 341 folgt die Bewegung des Mitnehmers 342 dem Pfeil c, so dass der Mitnehmer 342 aus der ersten Mitnehmerführung 141 gelöst wird. Die erste Stufe des Übernehmens der Palette 10 ist nun beendet. Bei der weiteren Umlaufbewegung der Kette beziehungsweise des Mitnehmers 342 greift dieser in die zweite Mitnehmerführung 142 an der Unterseite der Palette 10 ein, so dass die zweite Stufe des Übernehmens der Palette 10 durchgeführt werden kann, bis die Palette wie in Fig. 7(d) gezeigt ihre Verschiebeposition auf dem Palettenwechsler 3 erreicht hat.

In dieser Verschiebeposition verbleibt der Mitnehmer 342 als Arretierung in der Mitnehmerführung 142, so dass sich die Palette 10 während der Bewegung des Palettenwechslers 3 entlang des Schienensystems 2 nicht verschiebt. Nach dem Verschieben (Übernehmen) der Palette 10 auf den Palettenwechsler 3 wird die Palettenaufnahme 32 wie in Fig. 7(e) dargestellt um 90 Grad zurück in die 9-Uhr-Position gedreht, bevor der Palettenwechsler 3 entlang des Schienensystems 2 verfahren werden kann. Wie in Fig. 7(e) dargestellt steht der Palettenwechsler 3 in der 9-Uhr-Position (und entsprechend in der 3-Uhr-Position) nicht über die beiden äußeren Trageschienen 21 des Schienensystems 2 über, so dass ein Verfahren des Palettenwechsler 3 auf dem Schienensystem 2 bis zu einer Übergabeposition möglich ist. Im vorliegend illustrierten Beispiel wird der Palettenwechsler 3 nur um eine kurze Distanz in Richtung der X-Achse verfahren, um an der leeren Speicherposition 5 positioniert zu werden.

Nach dem Verfahren des Palettenwechslers 3 an die gewünschte Position wird die Palettenaufnahme 32 um 90 Grad in die 12-Uhr-Position gedreht, die in Fig. 7(f) dargestellt ist. Hierdurch werden die Schienen 31 der Palettenaufnahme 32 mit den Schienen 51 der Speicherstation ausgerichtet.

Der Vorgang des Übergebens der Palette 10 an die Speicherposition 5 erfolgt analog zum Übernehmen in zwei Stufen, wobei die Kette des Verschiebemechanismus 34 in umgekehrter Richtung angetrieben wird. Hierzu kann beispielsweise eine angetriebene Umlenkrolle 341 des Verschiebemechanismus 34 in entgegengesetzter Richtung gedreht werden. Der Mitnehmer 342 folgt dann zunächst dem Pfeil b aus Fig. 3(a) und 4(a) in umgekehrter Richtung und verschiebt hierdurch die Palette 10 zur Betriebsposition der Speicherstation 5 wie in Fig. 7(g) dargestellt ist. Zuletzt wird der Mitnehmer 342 entgegen der Richtung des Pfeils a bewegt, so dass er aus der ersten Mitnehmerführung 141 herausbewegt wird, womit der Vorgang des Übergebens der Palette 10 an die zuvor leere Speicherstation 5 abgeschlossen wird. Die Palettenaufnahme 32 kann nun wieder zurück in die 9-Uhr-Position gedreht werden. In Fig. 7(h) ist der Palettenwechsler 3 bereit für einen weiteren Vorgang des Übernehmens und Übergebens einer Palette 10. Es versteht sich, dass der Vorgang entsprechend abläuft wenn, die Palette 10 nicht von einer Werkzeugmaschine M1 sondern von einer Rüststation 4 oder einer Speicherstation 5 übernommen wird, beziehungsweise wenn die Palette 10 nicht an eine Speicherstation 5 sondern an einer Rüststation 4 oder Werkzeugmaschine M1, M2, M3 übergeben wird.

Der in Fig. 4(a) dargestellte Palettenwechsler 3 weist eine asymmetrische Palettenaufnahme 32 auf wobei das in Fig. 4(a) vorne dargestellte Ende der Palettenaufnahme 32 einen deutlich größeren Abstand zur Drehachse aufweist als das hintere Ende. Dieses lange Ende der Palettenaufnahme 32 dient wie zuvor anhand der Fig. 7(a) bis 7(h) beschrieben zum Überbrücken eines Abstands zwischen dem Palettenwechsler 3 und einer Betriebsposition in einer Speicherstation 5, einer Rüststation 4 oder einer Werkzeugmaschine M1, M2, M3. Hierzu wird wie zuvor beschrieben die Palettenaufnahme 32 um 90 Grad von der 9-Uhr-Position (oder entsprechend von der 3-Uhr-Position) in die 6-Uhr-Position beziehungsweise in die 12-Uhr-Position geschwenkt.

Fig. 4(b) zeigt eine Frontalansicht des Palettenwechslers 3 auf einem Schienensystem 2 mit zwei Trageschienen 21 und einer Antriebsschiene 22. Der Palettenwechsler 3 weist vier Rollen 35 auf, die auf den Trageschienen 21 aufliegen. Der Palettenwechsler 3 ferner weist einen elektrischen Motor als Antrieb 33 auf, der eine Bewegung des Palettenwechslers 3 entlang der Schienen 21 bewirkt. Hierzu weist die Antriebsschiene 22 eine Zahnstange auf, die mit einem Zahnrad des Antriebs 33 wirkverbunden ist. Der Antrieb des Palettenwechslers 3 kann somit wie bei einer Zahnradbahn erfolgen. Die Schienen des Schienensystems 22 sind entlang der X-Achse ausgerichtet und auf Verankerungen im Boden angeordnet. Über einen nicht dargestellten Stromabnehmer kann der Palettenwechsler elektrische Energie von einer Stromschiene 23 aufnehmen. Alternativ kann statt einer Stromschiene 23 auch eine Energiekette zum Versorgen des Palettenwechslers 3 mit elektrischer Energie verwendet werden.

Fig. 5(a) zeigt eine perspektivische Ansicht einer Rüststation 4 und Fig. 5(b) zeigt eine Schnittansicht der Rüststation 4 mit einer auf der Rüststation angeordneten Palette 10. In Fig. 5 ist eine senkrechte Drehachse der Rüststation 4 dargestellt. Die Drehachse steht parallel zur Z-Achse. Die Rüststation 4 weist einen um die Drehachse drehbaren Drehtisch 43 auf. Der Drehtisch 43 kann insbesondere um 360 Grad gedreht werden, um ein auf einer Palette 10 angeordnetes Werkstück entsprechend der Bearbeitung in einer Werkzeugmaschine auszurichten.

Auf dem Drehtisch 43 der Rüststation 4 sind zwei Schienen 41 mit T-förmigem Profil angeordnet. Wie in der Schnittansicht der Fig. 5(b) dargestellt, entspricht das T-förmige Profil der Schienen 41 dem T-förmigen Profil der Schienennuten 11 der Palette 10. Mittels der Schienen 41 kann in Zusammenwirkung mit den Führungsrollen 131 eine sehr genaue Positionierung der Palette 10 auf der Rüststation 4 erreicht werden. Die Position entlang der Schienen 41 wird durch zwei Indexzylinder 42 festgelegt. In Fig. 5(b) ist dargestellt, wie der Indexzylinder 42 in die Indexaufnahme 12 der Palette eingreift. Der Indexzylinder kann beispielsweise mittels einer hydraulischen Ansteuerung aus- und wieder eingefahren werden. Durch die Verwendung von zwei Indexzylindern 42 kann eine sehr hohe Positionsgenauigkeit von nur wenigen Mikrometern erreicht werden. Zum Nivellieren der Rüststation 4 weist die Rüststation 4 eine Dreipunktauflage 45 auf, die als einstellbares Nivellierelement 45 dient.

Die Schienen 41 der Rüststation 4 weisen ferner einen Klemmmechanismus 44 auf. Wird dieser betätigt, so wird die Palette 10 fest gegen Auflagepunkte auf dem Drehtisch 43 gezogen. Somit kann die Palette positionsfest auf der Rüststation 4 fixiert werden. Der Klemmmechanismus 44 entspricht im Wesentlichen einem Klemmmechanismus, wie er auch in Werkzeugmaschinen M verwendet wird.

Fig. 6(a) zeigt eine perspektivische Ansicht einer Speicherstation 5 und Fig. 6(b) zeigt eine Schnittansicht der Speicherstation 5 mit einer auf der Speicherstation angeordneten Palette 10. Im Unterschied zur Rüststation 4 weisen die Schienen 51 der Speicherstation 5 keinen T-förmigen Querschnitt auf, da hier keine hochgenaue Positionierung der Palette 10 notwendig ist.

Die Speicherstation 5 weist nur einen Indexzylinder 52 auf, der in der Schnittansicht der Fig. 6(b) in die Indexaufnahme 12 der Palette 10 eingreift. Dieser Indexzylinder 52 dient im Wesentlich zum Festhalten der Palette 10, so dass diese nicht ungewollt von der Speichstation 5 rollen kann. Mittels der Nivellierelemente 55 können die Schienen 51 der Speicherstation 5 in einer waagerechten Position justiert werden. Ferner weist die Speicherstation 5 eine Tropfwanne 53 auf, die zum Auffangen von Kühl- und/oder Schmierstoffresten sowie von Spänen dient, die nach einer Bearbeitung vom Werkstück tropfen beziehungsweise abfallen können.

Aufgrund ihres einfachen und soliden Aufbaus kann die Speicherstation 5 bei geringen Kosten eine stabile und sichere Ablage für Paletten 10 mit und ohne darauf angeordnetem Werkstück bereitstellen.

Fig. 11 zeigt eine weitere Konfiguration eines erfindungsgemäßen Palettensystems 1. Das in Fig. 11 gezeigte Palettensystem 1 weist an den Stirnseiten des Schienensystems jeweils in einem Bogen angeordnete Speicherstationen 5 auf, die hier beispielsweise in einem Winkel von 45 Grad zueinander angeordnet sind. Ein Palettenwechsler 3 kann wie in Fig. 11 illustriert an eine der Stirnseiten verfahren werden, und dort lediglich durch eine Drehbewegung eine von fünf Rüststationen 5 erreichen. Anstatt von Speicherstationen 5 können natürlich auch Werkzeugmaschinen oder Rüststationen 4 an den Stirnseiten des Schienensystems angeordnet werden.

Bei der in Fig. 11 dargestellten bogenförmigen Anordnung der Speicherstationen 5 um die Stirnseiten des Schienensystems 2 kann der technische Vorteil, der sich aus der Kombination von drehbaren Palettenaufnahmen mit einem linear verschiebbaren Palettenwechsler 3 ergibt, optimal ausgenutzt werden. Einerseits kann hierdurch eine höhere Anzahl von Speicherstationen 5 um das Schienensystem 2 angeordnet werden. Andererseits kann die Effizienz des Palettensystems 1 gesteigert werden, da die Verfahrwege geringer ausfallen. Ferner kann die Palettenaufnahme schon während des linearen Verfahrens des Palettenwechslers 3 entlang des Schienensystems 2 durch eine Drehung auf die angefahrene Betriebsposition ausgerichtet werden, so dass die benötigte Zeit zum Ausführen eines Palettenwechsels weiter reduziert werden kann.

Darüber hinaus illustriert die Fig. 11 auf eindrückliche Weise die Modularität und die sich daraus ergebene Flexibilität des erfindungsgemäßen Palettensystems 1. Das Palettensystem 1 kann somit optimal auf die Randbedingungen und den verfügbaren Platz einer Maschinenhalle oder eines sonstigen Aufbauortes angepasst werden.

Fig. 11 zeigt zudem eine Ausführung mit drei Palettenwechslern 3, die unabhängig voneinander auf dem Schienensystem verfahrbar sind. Somit können gleichzeitig mehrere Palettenwechsel durchgeführt werden, so dass insgesamt die Produktivität der dargestellten Fertigungsstraße mit den vier Werkzeugmaschinen M1, M2, M3, M4 erhöht werden kann.

Der in der Mitte von Fig. 11 dargestellte Palettenwechsler 3 weist zwei unabhängig voneinander drehbare Palettenaufnahmen auf. Die beiden Palettenaufnahmen sind vorzugsweise in einem Abstand entlang der X-Achse voneinander angeordnet, der dem Abstand zweier Speicherstationen 5 oder zweier Rüststationen 4 entspricht, so dass beide Palettenaufnahmen gleichzeitig einen Palettenwechsler durchführen können.

Bei mehreren Palettenwechslern 3 oder einem Palettenwechsler 3 mit zwei Palettenaufnahmen kann der Vorgang des Übernehmens einer Palette mit einem bearbeiteten Werkstück von einer Werkzeugmaschine und das anschließende Beladen der Werkzeugmaschine mit einem neuen Werkstück durch übergeben einer entsprechend bestückten Palette deutlich schneller ausgeführt werden als in einem Palettensystem 1 mit nur einem Palettenwechsler 3, da zwischen den beiden Schritten des Übernehmens der Palette mit dem fertigen Werkstück und des Übergebens der neuen Palette mit dem zu bearbeitenden Werkstück nur eine sehr kurze Verfahrweg entlang des Schienensystems 2 erfolgen muss.

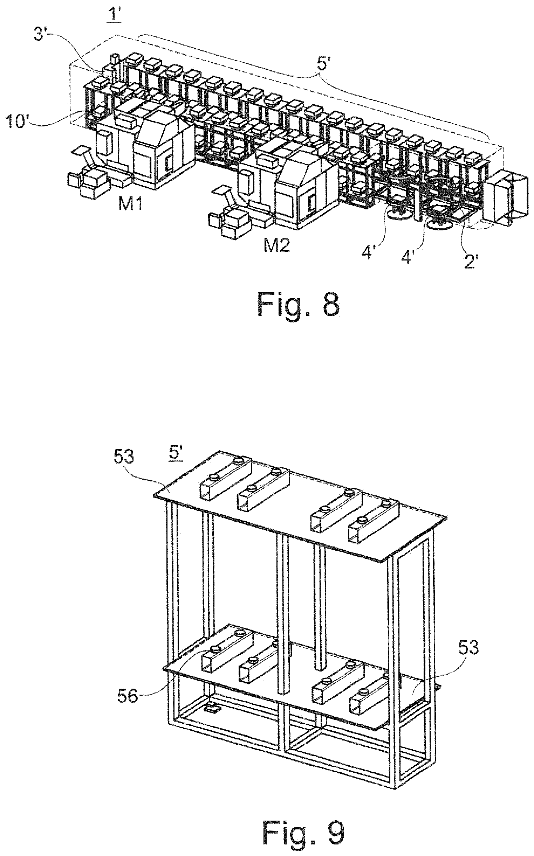

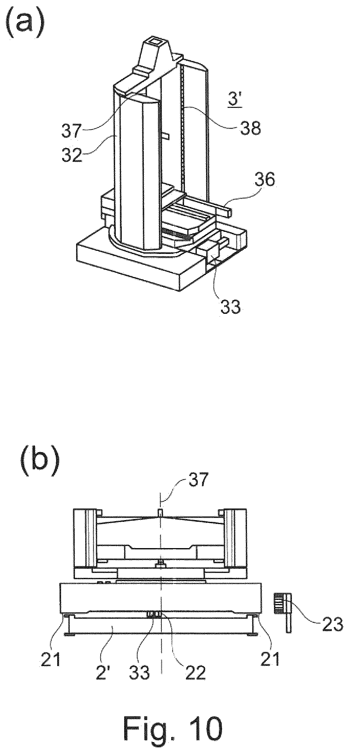

Ein weiteres Ausführungsbeispiel wird im Folgenden unter Bezugnahme auf Fig. 8 bis Fig. 10 beschrieben. Fig. 8 zeigt eine perspektivische Ansicht eines Palettensystems 1' gemäß einem zweiten Ausführungsbeispiel. Fig. 9 zeigt eine perspektivische Ansicht einer Speicherstation 5' des zweiten Ausführungsbeispiels. Fig. 10(a) zeigt eine perspektivische Ansicht eines Palettenwechslers 3' des zweiten Ausführungsbeispiels und Fig. 10(b) zeigt eine Frontalansicht des Palettenwechslers 3'. Im der folgenden Beschreibung wird insbesondere auf die wesentlichen Unterschiede des zweiten Ausführungsbeispiels zum ersten Ausführungsbeispiel eingegangen. Das Palettensystem 1' zum Speichern und Transportieren von Paletten ist im Vergleich zum Palettensystem 1 zum Speichern und Transportieren von Paletten des ersten Ausführungsbeispiels für kleinere Paletten für entsprechend weniger schwere Werkstücke ausgelegt. Es umfasst ähnlich wie das Palettensystem 1 zum Speichern und Transportieren von Paletten des ersten Ausführungsbeispiels ein lineares Schienensystem 2' mit zwei Trageschienen 21, einer Antriebsschiene 22 und einer Stromschiene 23.

Anders als das erste Ausführungsbeispiel ist das Palettensystem 1' zum Speichern und Transportieren von Paletten als Regalsystem ausgebildet, bei dem die Paletten auf Speicherstationen 5' mit zwei Regalebenen abgelegt werden können. Fig. 9 zeigt eine perspektivische Ansicht eines Speicherregals 5' mit vier Ablagepositionen, die jeweils vier erhöht angeordnete Palettenkegel 56 aufweisen. Jede Ebene umfasst zudem eine Tropfwanne 53.

Der Palettenwechsler 3' weist einen Palettenheber 36 mit einer teleskopisch ausfahrbaren Palettengabel auf. Zum Aufnehmen einer Palette wird die Palettengabel des Palettenhebers 36 unter einer Palette ausgefahren und dann angehoben. Zum Heben der Paletten weist der Palettenwechsler 3' einen Vertikalantrieb 37 auf, der den Palettenheber 36 entlang einer Vertikalführung 38 anheben und absenken kann. Die Vertikalführung 38 ist insbesondere als Zahnstange ausgebildet, die entlang der Z-Richtung an einem Rahmen des Palettenwechslers 3' angeordnet ist. Der Vertikalantrieb 37 kann beispielsweise als angetriebene, drehbare Gewindestange ausgeführt sein.

Der Rahmen des Palettenwechslers 3' kann um eine senkrechte Drehachse gedreht werden, um den Palettenheber 36 auf die Betriebspositionen der Paletten im Palettensystem 1' zum Speichern und Transportieren von Paletten auszurichten.

### Bezugszeichenliste

- 1; 1': Palettensystem
- 10: Palette
- 11: Schienennut
- 12: Indexaufnahme
- 131: Führungsrollen
- 132: Tragerollen
- 141: erste Mitnehmerführung
- 142: zweite Mitnehmerführung
- 15: Befestigungsnuten
- 2; 2': Schienensystem
- 21: Trageschiene
- 22: Antriebsschiene
- 23: Stromschiene
- 3; 3': Palettenwechsler
- 31: Schienen des Palettenwechslers
- 32: Palettenaufnahme
- 33: Antrieb des Palettenwechslers
- 34: Verschiebemechanismus des Palettenwechslers
- 341: Umlenkrolle
- 342: Mitnehmer
- 35: Rollen des Palettenwechslers
- 36: Palettenheber
- 37: Vertikalantrieb
- 38: Vertikalführung
- 4; 4': Rüststation
- 41: Schienen der Rüststation
- 42: Indexzylinder der Rüststation
- 43: Drehtisch der Rüststation
- 44: Klemmmechanismus
- 45: Nivellierelement
- 5: Speicherstation
- 51: Schienen der Speicherstation
- 52: Indexzylinder der Speicherstation
- 53: Tropfwanne
- 55: Nivellierelement
- 56: Palettenkegel
- M: Werkzeugmaschine

## Patentansprüche

1. Palettensystem (1, 1') zum Speichern und Transportieren von Paletten für Werkzeugmaschinen (M1, M2, M3), umfassend:
einen Palettenwechsler (3);
ein lineares Schienensystem (2; 2') zum Tragen und Führen des Palettenwechslers (3) entlang einer ersten Achse (X);
mindestens eine Rüststation (4; 4') zum Anordnen eines Werkstücks auf einer Palette (10; 10'); und
eine Vielzahl von Speicherstationen (5; 5') zum Bevorraten einer Palette (10);
wobei der Palettenwechsler (3; 3') mittels eines Antriebs (31) entlang des Schienensystems (2; 2') bewegbar ist, und
der Palettenwechsler (3; 3') mindestens eine Palettenaufnahme (32) mit einem Transportmechanismus aufweist, der dazu eingerichtet ist, die Palette an den Palettenwechsler (3) anzukoppeln und die Palette in einer zu einer zentralen, senkrechten Achse (Z) des Palettenwechsler senkrecht stehenden Richtung zu verfahren, um eine Palette (10; 10') von einer Vielzahl von Betriebspositionen zu übernehmen oder an eine der Vielzahl von Betriebspositionen zu übergeben,
wobei die Betriebspositionen umfassen:
die mindestens eine Rüststation (4; 4');
die Vielzahl von Speicherstationen (5; 5');
wobei
die Betriebspositionen dazu ausgelegt sind, mindestens eine in einem Arbeitsraum einer Werkzeugmaschine (M1, M2, M3) befindliche Bearbeitungsposition zum Bearbeiten des auf der Palette (10; 10') angeordneten Werkstücks zu umfassen,
**dadurch gekennzeichnet, dass**
die Palettenaufnahme (32) um die zentrale, senkrechte Achse (Z) des Palettenwechslers (3, 3') drehbar ist.

2. Palettensystem (1, 1') zum Speichern und Transportieren von Paletten nach Anspruch 1, wobei der Palettenwechsler (3; 3') eingerichtet ist, eine aufgenommene Palette während einer Bewegung des Palettenwechslers (3; 3') entlang des Schienensystems (2; 2') in einer Verschiebeposition zu positionieren, in der die aufgenommene Palette mittig auf dem Palettenwechsler (3; 3') angeordnet ist.

3. Palettensystem (1, 1') zum Speichern und Transportieren von Paletten nach Anspruch 1 oder 2, wobei der Palettenwechsler (3') einen Palettenheber (36) mit einer teleskopisch ausfahrbaren Palettengabel zum Aufnehmen von Palette (10') umfasst.

4. Palettensystem (1, 1') zum Speichern und Transportieren von Paletten nach Anspruch 3, wobei die Palettengabel in Richtung einer zweiten Achse (Y) ausfahrbar ist, um einen Abstand zwischen dem Palettenwechsler (3') und einer Betriebspositionen zu überbrücken.

5. Palettensystem (1, 1') zum Speichern und Transportieren von Paletten nach einem der vorhergehenden Ansprüche , wobei der Palettenwechsler durch eine Drehbewegung der Palettenaufnahme (32) direkt an die mindestens eine Rüststation (4; 4'), die Vielzahl von Speicherstationen (5; 5') oder an die Werkzeugmaschine (M1, M2, M3) angeschlossen werden kann

6. Palettensystem (1, 1') zum Speichern und Transportieren von Paletten nach einem der vorhergehenden Ansprüche , wobei die Vielzahl Speicherstationen (5) an einer ersten Längsseite des Schienensystems (2) angeordnet ist.

7. Palettensystem (1, 1') zum Speichern und Transportieren von Paletten nach einem der vorhergehenden Ansprüche , wobei die mindestens eine Rüststation (4) an einer zweiten Längsseite des Schienensystems (2) angeordnet ist, die der ersten Längsseite gegenüberliegt.

8. Palettensystem (1) zum Speichern und Transportieren von Paletten nach Anspruch 7, wobei auf der Palettenaufnahme (32) zwei Schienen (33) zum Tragen und Führen einer Palette (10) angeordnet sind, an oder zwischen denen der Transportmechanismus (34) angeordnet ist, der dazu eingerichtet ist, einen Transport der Palette entlang der Schienen (33) auf der Palettenaufnahme (32) zu bewirken.

9. Palettensystem (1) zum Speichern und Transportieren von Paletten nach Anspruch 8, wobei die Palettenaufnahme (32) asymmetrisch ist, so dass ein erstes Ende der Palettenaufnahme (32) einen größeren entlang der Schienen (33) gemessenen Abstand zur Drehachse (Z) aufweist, als ein zweites Ende der Palettenaufnahme (32), das dem ersten Ende gegenüberliegt.

10. Palettensystem (1) zum Speichern und Transportieren von Paletten nach einem der vorhergehenden Ansprüche, wobei das lineare Schienensystem (2) mindestens eine Trageschiene (21) und/oder mindestens eine Antriebsschiene (22), auf die der Antrieb (31) des Palettenwechslers (3) einwirkt, und/oder mindestens eine Stromschiene (23) zum Versorgen des Antriebs (31) des Palettenwechslers (3) mit elektrischer Energie aufweist.

11. Palettensystem (1) zum Speichern und Transportieren von Paletten nach einem der vorhergehenden Ansprüche, wobei die mindestens eine Rüststation (4) zwei Schienen (41) zum Tragen und Führen einer Palette (10) aufweist, die auf einem um 360 Grad drehbaren Drehtisch (42) angeordnet sind.

12. Palettensystem (1') zum Speichern und Transportieren von Paletten nach Anspruch 1, wobei die Speicherstationen (5')jeweils mindestens zwei übereinander angeordnete Ebenen mit jeweils mindestens zwei Ablagepositionen für Paletten (10') aufweisen.

13. Palettensystem (1') zum Speichern und Transportieren von Paletten nach Anspruch 12, wobei der Palettenwechsler (3') einen Vertikalantrieb (37) zum Anheben von Paletten (10') aufweist.

14. Verfahren zum Betreiben eines Palettensystems (1; 1') zum Speichern und Transportieren von Paletten nach einem der vorhergehenden Ansprüche, wobei die Paletten (10; 10') ausschließlich mittels einer Kombination der folgenden Verfahrensschritte bewegt werden:
- Verschieben des Palettenwechslers (3; 3') entlang der ersten Achse (X) auf dem Schienensystem (2; 2');
- Verschieben der Palette (10; 10') entlang einer zur ersten Achse senkrecht stehenden zweiten Achse (Y); und
- Drehen der Palettenaufnahme (32) um die senkrechte Achse (Z).

## Claims

1. A pallet system (1, 1') for storing and transporting pallets for machine tools (M1, M2, M3), comprising:
a pallet changer (3);
a linear rail system (2; 2') for supporting and guiding the pallet changer (3) along a first axis (X);
at least one set-up station (4; 4') for arranging a workpiece on a pallet (10; 10'); and
a plurality of storage stations (5; 5') for storing a pallet (10);
wherein the pallet changer (3; 3') is movable along the rail system (2; 2') by means of a drive (31), and
the pallet changer (3; 3') has at least one pallet receptacle (32) with a transport mechanism, which is configured to couple the pallet to the pallet changer (3) and to move the pallet in a direction perpendicular to a central, perpendicular axis (Z) of the pallet changer, in order to take over a pallet (10; 10') from a plurality of operating positions or to transfer it to one of the plurality of operating positions,
wherein the operating positions comprise:
the at least one set-up station (4; 4');
the plurality of storage stations (5; 5');
wherein
the operating positions are designed to comprise at least one machining position located in a working space of a machine tool (M1, M2, M3) for machining the workpiece arranged on the pallet (10; 10'), **characterized in that**
the pallet receptacle (32) is rotatable about the central, perpendicular axis (Z) of the pallet changer (3; 3').

2. The pallet system (1, 1') for storing and transporting pallets according to claim 1, wherein the pallet changer (3; 3') is configured to position a received pallet during a movement of the pallet changer (3; 3') along the rail system (2; 2') in a displacement position in which the received pallet is arranged centrally on the pallet changer (3; 3').

3. The pallet system (1, 1') for storing and transporting pallets according to claim 1 or 2, wherein the pallet changer (3') comprises a pallet lifter (36) with a telescopically extendable pallet fork for receiving pallet (10').

4. The pallet system (1, 1') for storing and transporting pallets according to claim 3, wherein the pallet fork is extendable in the direction of a second axis (Y) in order to bridge a distance between the pallet changer (3') and an operating position.

5. The pallet system (1, 1') for storing and transporting pallets according to any one of the preceding claims, wherein the pallet changer can be connected directly to the at least one set-up station (4; 4'), the plurality of storage stations (5; 5') or to the machine tool (M1, M2, M3) by a rotational movement of the pallet receiver (32).

6. The pallet system (1, 1') for storing and transporting pallets according to any one of the preceding claims, wherein the plurality of storage stations (5) is arranged on a first longitudinal side of the rail system (2).

7. The pallet system (1, 1') for storing and transporting pallets according to any one of the preceding claims, wherein the at least one set-up station (4) is arranged on a second longitudinal side of the rail system (2), which is opposite the first longitudinal side.

8. The pallet system (1) for storing and transporting pallets according to claim 7, wherein two rails (33) for supporting and guiding a pallet (10) are arranged on the pallet receiver (32), on or between which rails the transport mechanism (34) is arranged, which is configured to effect a transport of the pallet along the rails (33) on the pallet receiver (32).

9. The pallet system (1) for storing and transporting pallets according to claim 8, wherein the pallet receiver (32) is asymmetrical, so that a first end of the pallet receiver (32) has a greater distance to the axis of rotation (Z) measured along the rails (33) than a second end of the pallet receiver (32), which is opposite the first end.

10. The pallet system (1) for storing and transporting pallets according to any one of the preceding claims, wherein the linear rail system (2) has at least one support rail (21) and/or at least one drive rail (22), on which the drive (31) of the pallet changer (3) acts, and/or at least one busbar (23) for supplying the drive (31) of the pallet changer (3) with electrical energy.

11. The pallet system (1) for storing and transporting pallets according to any one of the preceding claims, wherein the at least one set-up station (4) has two rails (41) for supporting and guiding a pallet (10), which are arranged on a rotary table (42) rotatable by 360 degrees.

12. The pallet system (1') for storing and transporting pallets according to claim 1, wherein the storage stations (5') each have at least two levels arranged one above the other with in each case at least two storage positions for pallets (10').

13. The pallet system (1') for storing and transporting pallets according to claim 12, wherein the pallet changer (3') has a vertical drive (37) for lifting pallets (10').

14. A method for operating a pallet system (1; 1') for storing and transporting pallets according to any one of the preceding claims, wherein the pallets (10; 10') are moved exclusively by means of a combination of the following method steps:
- displacing the pallet changer (3; 3') along the first axis (X) on the rail system (2; 2');
- displacing the pallet (10; 10') along a second axis (Y) perpendicular to the first axis; and
- rotating the pallet receptacle (32) about the perpendicular axis (Z).

## Revendications

1. Système de palettes (1, 1') pour stocker et transporter des palettes pour des machines-outils (M1, M2, M3), comprenant :
un changeur de palettes (3) ;
un système de rail linéaire (2 ; 2') pour supporter et guider le changeur de palettes (3) le long d'un premier axe (X) ;
au moins une station de montage (4 ; 4') pour agencer une pièce à usiner sur une palette (10 ; 10') ; et
une pluralité de stations de stockage (5 ; 5') pour stocker une palette (10) ;
dans lequel le changeur de palettes (3 ; 3') peut être déplacé au moyen d'un entraînement (31) le long du système de rail (2 ; 2'), et
le changeur de palettes (3 ; 3') présente au moins un logement de palette (32) avec un mécanisme de transport qui est conçu pour coupler la palette au changeur de palettes (3) et pour déplacer la palette dans une direction perpendiculaire à un axe central (Z) perpendiculaire du changeur de palettes, afin de prendre en charge une palette (10 ; 10') d'une pluralité de positions de fonctionnement ou de la transférer à l'une de la pluralité de positions de fonctionnement,
dans lequel les positions de fonctionnement comprennent :
l'au moins une station de montage (4 ; 4') ;
la pluralité de stations de stockage (5 ; 5') ;
dans lequel
les positions de fonctionnement sont conçues pour comprendre au moins une position d'usinage se trouvant dans un espace de travail d'une machine-outil (M1, M2, M3) pour usiner la pièce à usiner agencée sur la palette (10 ; 10'), **caractérisé en ce que**
le logement de palette (32) peut tourner autour de l'axe central (Z) perpendiculaire du changeur de palettes (3 ; 3').

2. Système de palettes (1, 1') pour stocker et transporter des palettes selon la revendication 1, dans lequel le changeur de palettes (3 ; 3') est conçu pour positionner une palette reçue pendant un mouvement du changeur de palettes (3 ; 3') le long du système de rail (2 ; 2') dans une position de déplacement dans laquelle la palette reçue est agencée au centre sur le changeur de palettes (3 ; 3').

3. Système de palettes (1, 1') pour stocker et transporter des palettes selon la revendication 1 ou 2, dans lequel le changeur de palettes (3') comprend un élévateur de palettes (36) avec une fourche de palette extensible de manière télescopique pour recevoir une palette (10').

4. Système de palettes (1, 1') pour stocker et transporter des palettes selon la revendication 3, dans lequel la fourche de palette est extensible dans la direction d'un deuxième axe (Y) pour couvrir une distance entre le changeur de palettes (3') et une position de fonctionnement.

5. Système de palettes (1, 1') pour stocker et transporter des palettes selon l'une quelconque des revendications précédentes, dans lequel le changeur de palettes peut être raccordé directement à l'au moins une station de montage (4 ; 4'), à la pluralité de stations de stockage (5 ; 5') ou à la machine-outil (M1, M2, M3) par un mouvement de rotation du récepteur de palettes (32).

6. Système de palettes (1, 1') pour stocker et transporter des palettes selon l'une quelconque des revendications précédentes, dans lequel la pluralité de stations de stockage (5) est agencée sur un premier côté longitudinal du système de rail (2).

7. Système de palettes (1, 1') pour stocker et transporter des palettes selon l'une quelconque des revendications précédentes, dans lequel l'au moins une station de montage (4) est agencée sur un second côté longitudinal du système de rail (2) qui est opposé au premier côté longitudinal.

8. Système de palettes (1) pour stocker et transporter des palettes selon la revendication 7, dans lequel deux rails (33) pour supporter et guider une palette (10) sont agencés sur le récepteur de palettes (32), sur ou entre lesquels est agencé le mécanisme de transport (34) qui est conçu pour effectuer un transport de la palette le long des rails (33) sur le récepteur de palettes (32).

9. Système de palettes (1) pour stocker et transporter des palettes selon la revendication 8, dans lequel le récepteur de palettes (32) est asymétrique de sorte qu'une première extrémité du récepteur de palettes (32) présente une plus grande distance mesurée le long des rails (33) par rapport à l'axe de rotation (Z) qu'une seconde extrémité du récepteur de palettes (32) qui est opposée à la première extrémité.

10. Système de palettes (1) pour stocker et transporter des palettes selon l'une quelconque des revendications précédentes, dans lequel le système de rail linéaire (2) présente au moins un rail de support (21) et/ou au moins un rail d'entraînement (22) sur lequel l'entraînement (31) du changeur de palettes (3) agit, et/ou au moins un rail électrique (23) pour alimenter l'entraînement (31) du changeur de palettes (3) en énergie électrique.

11. Système de palettes (1) pour stocker et transporter des palettes selon l'une quelconque des revendications précédentes, dans lequel l'au moins une station de montage (4) présente deux rails (41) pour supporter et guider une palette (10), qui sont agencés sur une table rotative (42) pouvant tourner de 360 degrés.

12. Système de palettes (1') pour stocker et transporter des palettes selon la revendication 1, dans lequel les stations de stockage (5') présentent respectivement au moins deux niveaux agencés l'un au-dessus de l'autre avec respectivement au moins deux positions de dépôt pour des palettes (10').

13. Système de palettes (1') pour stocker et transporter des palettes selon la revendication 12, dans lequel le changeur de palettes (3') présente un entraînement vertical (37) pour soulever des palettes (10').

14. Procédé pour faire fonctionner un système de palettes (1 ; 1') pour stocker et transporter des palettes selon l'une quelconque des revendications précédentes, dans lequel les palettes (10 ; 10') sont déplacées exclusivement au moyen d'une combinaison des étapes de procédé suivantes :
- déplacement du changeur de palettes (3 ; 3') le long du premier axe (X) sur le système de rail (2 ; 2') ;
- déplacement de la palette (10 ; 10') le long d'un deuxième axe (Y) perpendiculaire au premier axe ; et
- rotation du logement de palette (32) autour de l'axe perpendiculaire (Z).
